# EUROPÄISCHE PATENTSCHRIFT

(11) **EP 0 792 481 B1**
(45) Veröffentlichungstag und Bekanntmachung des Hinweises auf die Patenterteilung: **03.06.1998**
(21) Anmeldenummer: 95932781.8
(22) Anmeldetag: 21.09.1995
(51) Int. Cl.: G05B 19/401, B25J 9/16

(54) **VERFAHREN UND VORRICHTUNG ZUM KALIBRIEREN EINER STEUERUNG ZUR ABLENKUNG EINES LASERSTRAHLS**
PROCESS AND DEVICE FOR CALIBRATING A LASER BEAM SCANNING CONTROL
PROCEDE ET DISPOSITIF D'ETALONNAGE D'UNE COMMANDE DE BALAYAGE D'UN FAISCEAU LASER

(30) Priorität: 18.10.1994 DE 4437284
(43) Veröffentlichungstag der Anmeldung: 03.09.1997
(73) Patentinhaber: EOS GmbH ELECTRO OPTICAL SYSTEMS, 82152 Planegg (DE)
(72) Erfinder: WILKENING, Christian, D-86911 Diessen/Ammersee (DE); SERBIN, Jürgen, D-82166 Gräfelfing (DE); LANGER, Hans, J., D-82166 Gräfelfing (DE); HORNIG, Guido, D-80339 München (DE); RÖNNER, Andreas, D-81371 München (DE)
(74) Vertreter: Prüfer, Lutz H., Dipl.-Phys.
(86) Internationale Anmeldenummer: EP9503724
(87) Internationale Veröffentlichungsnummer: WO9612217

(56) Entgegenhaltungen:
- WO-A-94/15265
- DE-A- 4 112 695
- DE-A- 4 134 265
- DE-A- 4 227 817
- FR-A- 2 696 969
- US-A- 4 453 085
- PATENT ABSTRACTS OF JAPAN vol. 18 no. 250 (P-1736) ,15.Mai 1994 & JP,A,06 034349 (KOBE STEEL LTD.) 8.Februar 1994,

## Beschreibung

Die Erfindung bezieht sich auf ein Verfahren und eine Vorrichtung gemäß dem Oberbegriff des Anspruches 15 zum Kalibrieren einer Steuerung zur Ablenkung eines Laserstrahls für Rapid-Prototyping-Systeme.

Bei einem unter der Bezeichnung "Rapid Prototyping" oder "formgebendes Fertigungsverfahren unter Zuhilfenahme von Lasertechnik" bekannten Verfahren wird ein dreidimensionales Objekt schichtweise durch Aufbringen und anschließendes Verfestigen aufeinanderfolgender Schichten eines zunächst flüssigen oder eines pulverförmigen Materials hergestellt. Die Verfestigung erfolgt dabei durch einen gebündelten Lichtstrahl in Form eines Laserstrahls, der auf dem Objekt entsprechende Stellen der Schicht gerichtet bzw. abgelenkt wird und dort die Verfestigung des Materials bewirkt. Die Ablenkung des Laserstrahls erfolgt über einen Scanner, der über eine Steuerung derart betrieben wird, daß der Laserstrahl auf jede gewünschte Position in einer Arbeitsebene, die durch die Ebene der obersten zu verfestigenden Schicht des Objektes definiert ist, abgelenkt werden kann. Das Rapid-Prototyping-Verfahren und eine Vorrichtung zur Durchführung des Verfahrens sind beispielsweise aus der DE 41 34 265 bekannt.

Um die Koordinaten für den Scanner in realen Koordinaten, d. h. in Positionskoordinaten des Auftreffpunktes des Laserstrahles in der Arbeitsebene angeben zu können, benötigt die Scannersteuerung eine Korrekturtabelle. Die Korrekturtabelle enthält eine Zuordnung der realen Koordinaten zu Scannerkoordinaten, d.h. zu den Koordinaten von in dem Scanner enthaltenen Ablenkspiegeln. Diese Korrekturtabelle kann analytisch erstellt werden, wobei eine trigonometrische Feldverzerrung und Effekte der Scanneroptik ausgeglichen werden. Scanner- und prozeßspezifische Fehler können analytisch jedoch nicht korrigiert werden. Deshalb wird zur Korrektur der Scannersteuerung eine Kalibrierung durchgeführt, die über die Messung eines Fehlers zwischen Soll- und Istposition des Laserstrahls in der Arbeitsebene die Korrekturtabelle angleicht.

Bei einem bekannten Kalibrierungsverfahren wird mit einem positionsempfindlichen Detektor in der Arbeitsebene des Scanners an verschiedenen Positionen die Istposition des Laserstrahls gemessen. Durch Vergleich der gemessenen Istpositionen mit Sollpositionen und Interpolation der Meßpunkte wird eine Korrekturtabelle erstellt. Für die Genauigkeit der Kalibrierung ist die Positioniergenauigkeit des Detektors entscheidend. Jedes der beteiligten Systeme benötigt diese Positioniergenauigkeit. Da der Prozeß für große Arbeitsfelder sehr lange dauert, zur Kalibrierung des Scanners für ein 600 mm x 600 mm großes Arbeitsfeld werden etwa 6 - 8 Stunden benötigt, gehen eine mögliche Drift des Lasers und des Scanners in die Kalibrierung als systematischer Fehler ein. Die Mechanik zur Durchführung der Kalibrierung, d. h. der Detektor und eine Einrichtung zum Positionieren des Detektors, sind in dem Rapid-Prototyping-System selbst erforderlich. Eine iterative Durchführung des Verfahrens ist aufgrund der langen benötigten Kalibrierungszeitdauer nicht sinnvoll und auch nicht rentabel. Außerdem ist der Detektor nur für bestimmte Wellenlängen des Laserlichtes und bestimmte Laserleistungen einsetzbar, was zu einer eingeschränkten Anwendbarkeit des Verfahrens führt.

Eine andere bekannte Möglichkeit eines Kalibrierungsverfahrens besteht darin, daß der Laserstrahl über einen Spiegel direkt in eine Videokamera abgelenkt wird. Dabei werden jeweils die einzelnen Auftreffpunkte des Laserstrahles in der Kamera digitalisiert, nicht jedoch ein Bild des gesamten Arbeitsfeldes. Durch Interpolieren verschiedener Istpositionen des Laserstrahls wird eine Korrekturtabelle erstellt. Dieses Verfahren kann iterativ eingesetzt werden, da es sehr schnell ist. Das Auflösungsvermögen der Kamera geht jedoch direkt in die Genauigkeit ein. Je größer das Arbeitsfeld ist, desto schlechter ist die Auflösung. Aus der WO94/15265 ist eine Vorrichtung nach dem Oberbegriff des Anspruches 15 bekannt.

In einem aus der WO94/15265 bekannten Verfahren wird der Laserstrahl auf verschiedene Positionen auf einer brennbaren Unterlage gelenkt, um darauf vorgedruckte Rahmen, die Sollpositionen des Laserstrahles darstellen, zu markieren. Mit einem Pixelscanner wird sodann die Abweichung zwischen den Istpositionen und den Sollpositionen des Laserstrahls auf der Unterlage gemessen und eine Korrekturtabelle erstellt. Die Genauigkeit dieses Verfahrens ist abhängig von der Auflösung des Scanners, mit dem die Unterlage ausgewertet wird von der Genauigkeit der vorgedruckten Rahmen und der Justierung der Unterlage mit den vorgedruckten Rahmen in dem Rapid-Prototyping-System. Das Verfahren ist sehr zeitaufwendig, da die Unterlage digitalisiert werden muß und für jeden Rahmen der Mittelpunkt, die Sollposition des Laserstrahls und die Istposition des Laserstrahls ermittelt werden muß.

Aus der FR-A-2 696 969 ist ein Verfahren zur Kalibrierung eines Roboterarmes bekannt, bei dem an dem Roboterarm ein Laser angebracht ist, der einen Laserstrahl auf eine Unterlage abgibt. Die Unterlage und damit auch der Auftreffpunkt des Laserstrahls auf der Unterlage wird von einer fest montierten Kamera aufgenommen. Das Bild wird digitalisiert und zur Kalibrierung des Roboterarmes verwendet.

Aus der US 4,453,085 ist ein Verfahren bekannt, bei dem die Position eines Roboterarms elektro-optisch gemessen wird und mit einem externen Referenzpunkt verglichen wird, so daß die Positioniergenauigkeit des Roboterarms verbessert wird.

Aus der JP 06-034349 ist ein Verfahren zur Kontrolle der Oberflächenebenheit bekannt, bei dem ein erzeugtes Hell-Dunkel-Bild integral verarbeitet wird. Zur Verringerung des Einflusses eines Loches in dem Objekt wird für das Hell-Dunkel-Bild ein Grenzwert für den Grauwert festgelegt, so daß das Loch nicht berücksichtigt wird.

Es ist Aufgabe der Erfindung, ein Kalibrierungsverfahren und eine Vorrichtung bereitzustellen, das bzw. mit der eine Kalibrierung und eine Beurteilung einer bereits durchgeführten Kalibrierung mit hoher Genauigkeit und hoher Geschwindigkeit ohne auflösungsbedingte Beschränkung der Größe des Arbeitsfelds erlaubt bzw. möglich ist.

Die Aufgabe wird gelöst durch ein Verfahren nach dem Patentanspruch 1 und eine Vorrichtung nach Patentanspruch 15. Weiterbildungen des Verfahrens sind in den Unteransprüchen gegeben.

Das Verfahren hat den Vorteil, daß das Testbild in sehr kurzer Zeit erzeugt werden kann beispielsweise in 30 Sekunden. In diesem Zeitraum auftretende Laser- und Scannerdriften gegen nur unwesentlich in die Kalibrierung ein. Dadurch wird ein stationärer Zustand kalibriert. Falls Driften von einer durchgeführten zur nächsten Kalibrierung auftreten, führen diese nicht zu einer Verzerrung der Kalibrierung, sondern verändern bzw. verschieben das gesamte Testbild nur um einen Offset. Die gesamte Kalibrierung ist wesentlich schneller durchzuführen als bei dem Verfahren, bei dem ein positionsempfindlicher Detektor verwendet wird. Das Verfahren hat daher den Vorteil, daß es iterativ durchzuführen ist und damit zu einer hohen Genauigkeit führt.

Die Auswertung des Testbildes kann in einer anderen Vorrichtung durchgeführt werden, als die Erzeugung des Testbildes. Das hat den Vorteil, daß die Vorrichtung zur Auswertung des Testbildes für die Kalibrierung von Lasersteuerungen verschiedener Rapid-Prototyping Systeme genutzt werden kann und die Kalibrierung an einer zentralen Stelle durchgeführt werden kann. Somit reduziert sich der Zeit- und Arbeitsaufwand für einen Benutzer eines Rapid-Prototyping-Systemes erheblich.

Das Testbild kann zur Digitalisierung in Einzelbilder zerlegt werden, wobei Koordinaten von Merkmalen der Einzelbilder nach der Digitalisierung für die Auswertung zusammengesetzt werden. Die Digitalisierung kann beispielsweise mit einer Videokamera oder einem Pixelscanner mit entsprechender Auflösung und Graustufenerkennung erfolgen. Insbesondere die Verwendung eines Pixelscanners stellt eine wirtschaftliche Lösung einer Bildaufnahme dar.

Die Größe der Einzelbilder kann durch ein zu wählendes Objektiv der Kamera verändert werden, wodurch sich die Genauigkeit steigern läßt. Dadurch ist das Verfahren unabhängig vom Auflösungsvermögen einer elektronischen Schaltung der der Videokamera. Das Zusammensetzen der Einzelbilder erlaubt Arbeitsfeldgrößen, die nur durch die Positionierbarkeit der Kamera begrenzt werden.

Die Verwendung eines für die jeweilige Wellenlänge des Laserlichtes und für die jeweilige Laserleistung geeigneten Filmes zum Erzeugen eines Testbildes erlaubt die Anwendung des Verfahrens bei Rapid-Prototyping-Systemen mit unterschiedlichsten Lasern.

Es folgt die Beschreibung eines Ausführungsbeispiels anhand der Figuren.

Von den Figuren zeigen:
- Fig. 1a: eine schematische Darstellung einer Vorrichtung zur Erzeugung eines Testbildes zur Durchführung des erfindungsgemäßen Verfahrens;
- Fig. 1b: eine schematische Darstellung einer Vorrichtung zur Auswertung des Testbildes zur Durchführung des erfin-dungsgemäßen Verfahrens;
- Fig. 2: eine schematische Darstellung des Verfahrensablaufs der Kalibrierung.

Eine Vorrichtung zur Durchführung des erfindungsgemäßen Verfahrens weist eine Vorrichtung zum Erzeugen eines Testbildes und eine Vorrichtung zum Auswerten des Testbildes auf, die räumlich voneinander getrennt sind. Die Vorrichtung zum Erzeugen eines Testbildes ist ein Teil eines Rapid-Prototyping-Systems.

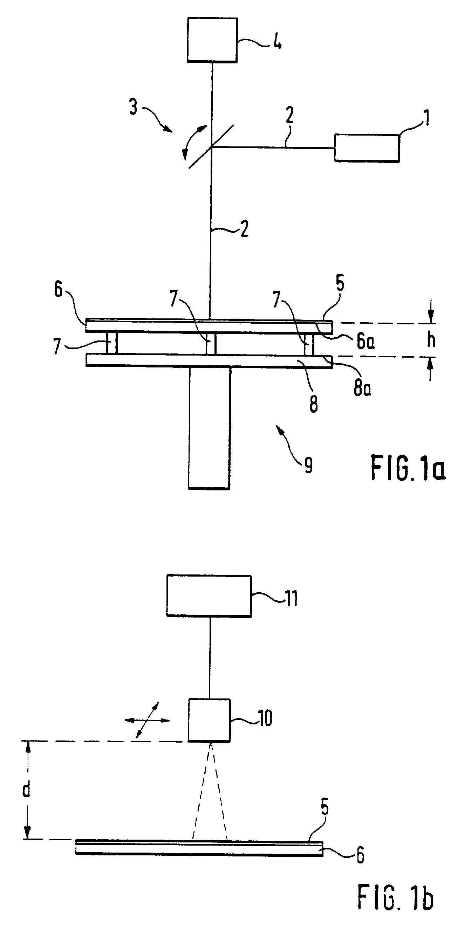

Wie aus Fig. 1a ersichtlich ist, weist die Vorrichtung zum Erzeugen eines Testbildes einen Laser 1, der einen gerichteten Laserstrahl 2 abgibt, sowie einen XY-Scanner 3 in Form eines Galvanometerscanners, zum Ablenken des Laserstrahls 2 auf. Auch ein piezoelektrisch gesteuerter Scanner ist möglich. Zum Steuern des Scanners 3 ist eine Steuerung 4 vorgesehen, die die für die Ansteuerung des Scanners erforderlichen Daten, beispielsweise Spannungsverläufe, erzeugt. In der Strahlrichtung des durch den Scanner 3 abgelenkten Laserstrahles 2 ist ein für eine Wellenlänge des Laserlichtes und/oder eine bestimmte Laserleistung empfindlicher Film 5 zum Erzeugen eines Testbildes vorgesehen, auf den der abgelenkte Laserstrahl 2 auftrifft. Als lichtempfindlicher Film 5 ist beispielsweise Thermopapier oder UV-empfindliches Fotopapier qeeiqnet. Der Film 5 definiert eine Arbeitsebene des Scanners 3.

Zum Tragen des lichtempfindlichen Films 5 ist ein ebener Träger 6, beispielsweise in Form einer Plexiglasplatte, vorgesehen, auf deren dem Laserstrahl zugewandten Seite 6a der lichtempfindliche Film 5 angeordnet ist. Der Träger 6 weist an seiner dem Film 5 bzw. dem Laserstrahl 2 abgewandten Seite höhenverstellbare Füße 7, beispielsweise in Form von Verstellschrauben, auf, mittels derer der Träger 6 auf der Oberseite 8a einer Trägerplattform 8 eines Objektträgers 9 in dem Rapid-Prototyping-System anbringbar ist. Der Träger 6 ist derart höhenverstellbar, daß er einen definierten Abstand h parallel zur Oberseite 8a der Trägerplattform 8 aufweist, so daß er auch parallel zur einer sich über dem Objektträger erstreckenden Oberfläche eines Bades aus verfestigbaren Material in dem Rapid-Prototyping-System, die eine Bildebene für den Laserstrahl definiert, ist. Der Träger 6 ist zusammen mit dem darauf befindlichen Film 5 von dem Objektträger 9 abnehmbar, so daß er abgenommen und in die Vorrichtung zur Auswertung des Testbildes eingebracht werden kann.

Wie aus Fig. 1b ersichtlich ist, umfaßt die Vorrichtung zum Auswerten des Testbildes eine mittels einer Computersteuerung positionierbare Videokamera 10 und einen mit der Videokamera 10 verbundenen Computer 11. Die Vorrichtung umfaßt ferner einen nicht gezeigten höhenverstellbaren Halter zum Halten des Trägers 6 mit dem darauf angeordneten Film 5, so daß der Film 5 einen Abstand d zum Objektiv der Videokamera aufweist. Die Videokamera 10 ist über dem in die Vorrichtung eingebrachten Film 5 derart positionierbar, daß mit der Kamera das gesamte Arbeitsfeld zum Erzeugen von Bildausschnitten eines auf dem Film 5 erzeugten Testbildes abgefahren werden kann.

In einem weiteren Ausführungsbeispiel wird anstelle der positionierbaren Videokamera 10 ein Pixelscanner verwendet.

Bei dem Verfahren zur Kalibrierung der Scannersteuerung 4 wird zuerst der Träger 6 mittels der höhenverstellbaren Füße 7 mit Hilfe einer Wasserwaage so horizontal einjustiert, daß der Träger 6 parallel zu der Trägerplattform 8 bzw. parallel zu der Badoberfläche ist.

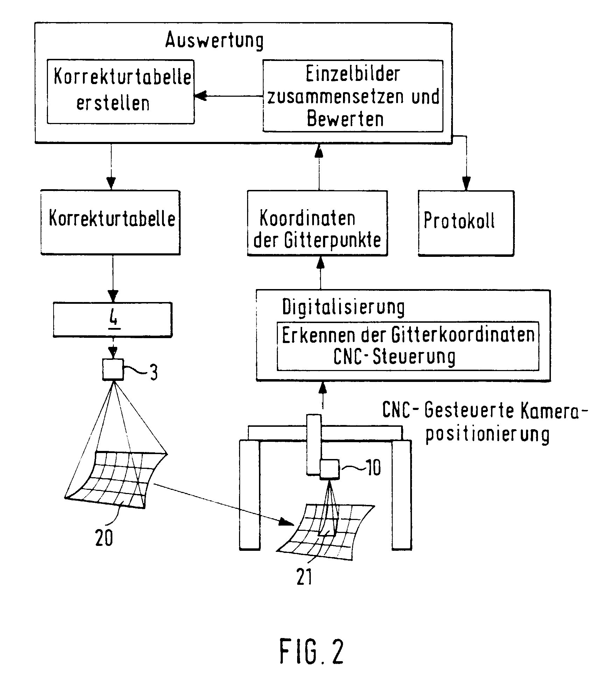

Auf der dem Laserstrahl 2 zugewandten Oberfläche des Trägers 6 wird sodann der lichtempfindlicher Film 5 aufgelegt bzw. befestigt. Anschließend wird der lichtempfindliche Film 5, wie aus Fig. 2 ersichtlich ist, durch Ablenken des Laserstrahls 2 über den Scanner 3 an vorgegebene Positionen auf dem Film 5 zum Erzeugen eines Testbildes 20 bestrahlt. Die Ablenkung des Laserstrahls 2 mit dem Scanner 3 erfolgt dabei zu Beginn der Iteration auf der Grundlage einer analytisch erzeugten Korrekturtabelle, welche die Zuordnung zwischen Koordinaten von in dem Scanner angeordneten Ablenkspiegeln und den Istkoordinaten, d. h. den Auftreffpunkten des Laserstrahls 2 auf dem Arbeitsfeld angibt. Bevorzugt erfolgt die Bestrahlung des lichempfindlichen Films in der Form eines Testgitters, welches ein Koordinatenraster von Istkoordinaten darstellt. Der Mittelpunkt des lichtempfindlichen Films 5 und damit der Mittelpunkt des Arbeitsfelds wird zur Erzeugung einer Mittelpunktskodierung gesondert markiert.

Bei der Verwendung eines Pixelscanners zur Bildaufnahme werden entsprechend der Größe des Pixelscanners Markierungen zur Teilbilderkennung vorgesehen.

Die Erzeugung des Testbilds erfolgt in sehr kurzer Zeit etwa in 30 Sekunden oder weniger. In dieser Zeit ist die Wahrscheinlichkeit für eine erhebliche Laser- bzw. Scannerdrift sehr gering. Daher wird ein stationärer Zustand des Lasers und des Scanners in dem Testbild 20 festgehalten.

Das erzeugte Testbild 20 wird als nächstes ausschnittsweise untersucht bzw. abgetastet. Dazu wird die Videokamera 10 sukzessive über dem erzeugten Testbild 20 verfahren, so daß jeweils Bildausschnitte 21 des Testbildes 20 mit der Kamera erzeugt werden. Die Größe der Bildausschnitte 21 kann durch Wahl des Objektivs der Videokamera 10 bestimmt werden.

Die Verwendung einer Videokamera 10 bietet den Vorteil, daß durch Wahl eines geeigneten Objektivs die Genauigkeit stark verbessert werden kann, da die Auflösung bei einer Digitalisierung dadurch wesentlich erhöht wird. Bei der Verwendung eines wirtschaftlichen und mobilen Pixelscanners wird jeder Bildausschnitt 21 einzeln eingescannt.

Jeder Bildausschnitt 21 wird in dem Computer 11 mit einem entsprechenden Bildverarbeitungsprogramm analysiert. Dabei werden in dem Bildausschnitt 21 befindliche Gitterkreuzungen des Testgitters auf der Grundlage einer Grauwertanalyse digitalisiert und als Bildkoordinaten gespeichert. Die Grauwertanalyse steigert die Auflösung beträchtlich im Vergleich zu einer bloßen Schwarz-Weiß-Analyse. Die Analyse erlaubt das Erkennen von Testbildern unterschiedlichsten Kontrastes, Ausleuchtung und Formats. Die Bildkoordinaten können durch die Abbildungseigenschaften der Videokamera 10 von den realen Koordinaten, die durch die Auftreffpunkte des Laserstrahles auf dem Arbeitsfeld definiert sind, abweichen.

Bei der Verwendung eines Pixelscanners werden der Größe des Pixelscanners entsprechende Teilbilder überlappend digitalisiert.

Als nächstes werden die mit dem Bildverarbeitungsprogramm erzeugten Bildkoordinaten der Gitterpunkte der digitalisierten Einzelbilder sowie deren Mittelpunktskodierungen an ein Auswerteprogramm übergeben. Mittels dieses Auswerteprogramms werden die digitalisierten Einzelbilder zu einem Gesamtbild zusammengesetzt, wobei das Auswerteprogramm die Mittelpunktskodierung des Testbildes erkennt. Bei Verwendung eines Pixelscanners werden zusätzlich erzeugte Positionsmarken zur Auswertung und zum Zusammensetzen der Einzelbilder verwendet.

Zur Kamerakalibrierung werden die Bildkoordinaten des erzeugten Gesamtbildes mit den digitalisierten Koordinaten, eines photomechanisch gefertigten Referenzgitters verglichen, wobei eine durch die Abbildung der Kamera verursachte Abweichung zwischen Bildkoordinaten und realen Koordinaten in der Arbeitsebene erkannt wird und korrigiert wird, so daß die Istpositionen des Laserstrahls in dem Gesamtbild in realen Koordinaten vorliegen. Die Mittelpunktskodierung des Testbilds kann dabei zur Transformation verwendet werden. Die Bewertung des Gesamtbilds wird in einem Protokoll gespeichert.

Auf der Grundlage des Vergleichs der gemessenen Istpositionen des Laserstrahls 2 auf dem Testbild 20 mit vorgegebenen Sollpositionen wird die Korrekturtabelle modifiziert.

Das Auswerteprogramm verfügt über eine graphische Benutzeroberfläche und ist somit leicht zu bedienen. Das Programm erlaubt die analytische Erstellung der unmodifizierten Korrekturtabelle mit und ohne Planfeldkorrektur. Ferner kann das Programm gemessene Punkte darstellen, die Punktekoordinaten des gesamten Testbildes unabhängig von der Gitterkonstante zusammensetzen und darstellen, ein Bewertungsprotokoll ausgeben, die Korrekturtabelle unter Anwendung der Meßdaten modifizieren und Korrekturtabellen anzeigen sowie für die Scannersteuerung 4 verwendbar abspeichern. Das Auswerteprogramm ist außerdem in der Lage, die gemessenen Höhe h des Abstands des Trägers 6 zur Oberseite der Trägerplattform 8 zur Erzeugung einer Höhenkorrektur für die Korrekturtabelle zu verarbeiten. Die Höhenkorrektur dient zur Steuerung des Scanners für den Fall, daß die Kalibrierung in einem Rapid-Prototyping-system durchgeführt wird, bei dem der Träger 6 des Films 5 nicht exakt in der Ebene der Oberfläche des bades aus verfestigbaren Material positioniert werden kann, da z.B. das Prozeßmedium bzw. das verfestigbare Material nicht von dort entfernt werden kann.

Die mit dem Auswerteprogramm modifizierte Korrekturtabelle wird anschließend an die Scannersteuerung 4 übergeben. Ein neues Testbild kann damit erstellt, vermessen und ausgewertet werden. Diese Auswertung kann wieder zur Modifikation der Korrekturtabelle herangezogen werden. Der Vorgang führt nach ein bis zwei Iterationen zu einem Scannersystem mit realen Koordinaten.

Die Auswertung von Testbildern aus verschiedenen Rapid-Prototyping-Systemen kann nacheinander durchgeführt werden und die so erzeugten Korrekturtabellen können auf die Systeme mittels geeigneter Datenübertragung übertragen werden.

## Patentansprüche

1. Verfahren zur Kalibrierung der Steuerung zur Ablenkung eines Laserstrahls für Rapid-Prototyping-Systeme mit den Schritten:
a) Erzeugen eines Testbildes (20) durch Bestrahlen eines lichtempfindlichen Mediums (5) mit einem Laserstrahl (2) an vorgegebenen Sollpositionen in Abhängigkeit von Positionskoordinaten
b) Erzeugen von digitalisierten Einzelbildern von Ausschnitten (21) des Testbildes (20)
c) Zusammensetzen der digitalisierten Einzelbilder zu einem Gesamtbild des Testbildes (20)
d) Vergleichen von Istpositionen des Laserstrahls (2) auf dem Gesamtbild mit den Positionskoordinaten
e) Berechnen und Bereitstellen von Korrekturdaten für die Steuerung (4) zur Ablenkung des Laserstrahls (2) auf der Grundlage der Vergleichsergebnisse.

2. Verfahren nach Anspruch 1, dadurch gekennzeichnet, daß das Erzeugen der digitalisierten Einzelbilder jeweils durch Erzeugen eines Ausschnittes (21) des Testbildes (20) mit einer Bildaufnahmeeinrichtung (10) und anschließendes Digitalisieren des Ausschnittes (21) in einem Computer (11) erfolgt.

3. Verfahren nach Anspruch 2, dadurch gekennzeichnet, daß als Bildaufnahmeeinrichtung eine positionierbare Videokamera (10) verwendet wird und die Positionierung der Videokamera (10) zum Erzeugen der Ausschnitte (21) des Testbildes (20) mittels eines Computers (11) gesteuert wird.

4. Verfahren nach Anspruch 2, dadurch gekennzeichnet, daß als Bildaufnahmeeinrichtung ein positionierbarer Pixelscanner verwendet wird und die Positionierung des Pixelscanners zum Erzeugen der Ausschnitte (21) des Testbildes (20) mittels eines Computers (11) gesteuert wird.

5. Verfahren nach Anspruch 2, dadurch gekennzeichnet, daß als Bildaufnahmeeinrichtung ein Pixelscanner verwendet wird.

6. Verfahren nach einem der Ansprüche 1 bis 5, dadurch gekennzeichnet, daß als lichtempfindliches Medium ein für eine Wellenlänge des Laserstrahls (2) empfindlicher Film (5) verwendet wird.

7. Verfahren nach einem der Ansprüche 1 bis 6, dadurch gekennzeichnet, daß als Testbild (20) ein Testgitter in Form eines Koordinatenrasters erzeugt wird.

8. Verfahren nach einem der Ansprüche 1 bis 7, dadurch gekennzeichnet, daß auf dem Testbild (20) eine Mittelpunktkodierung erzeugt wird.

9. Verfahren nach Anspruch 4 oder 5, dadurch gekennzeichnet, daß für das Erzeugen der digitalisierten Einzelbilder mit dem Pixelscanner Positioniermarken auf dem Testbild (20) erzeugt werden.

10. Verfahren nach einem der Ansprüche 2 bis 9, dadurch gekennzeichnet, daß das Erzeugen der digitalisierten Einzelbilder auf der Grundlage einer Grauwertanalyse der mit der Bildaufnahmeeinrichtung erzeugten Ausschnitte (21) des Testbildes (20) im Computer (11) erfolgt.

11. Verfahren nach einem der Ansprüche 1 bis 10, dadurch gekennzeichnet, daß eine Digitalisierung von Koordinaten des Testbildes (20) mittels eines Referenzgitters erfolgt.

12. Verfahren nach Anspruch 11, dadurch gekennzeichnet, daß als Referenzgitter ein fotomechanisch erzeugtes Präzisionsreferenzgitter verwendet wird.

13. Verfahren nach Anspruch 11 oder 12, dadurch gekennzeichnet, daß die Digitalisierung den Vergleich von Bildkoordinaten des Gesamtbildes mit Koordinaten des Referenzgitters und die Umrechnung der Bildkoordinaten in reale Koordinaten zum Erhalten der Istpositionen des Laserstrahles in dem Gesamtbild in realen Koordinaten auf der Grundlage des Vergleichs umfaßt.

14. Verfahren nach einem der Ansprüche 6 bis 13, dadurch gekennzeichnet, daß der Film (5) auf eine auf einem Objektträger (8, 9) eines Rapid-Prototyping-Systems angebrachten und relativ zu dem Objektträger höhenverstellbaren Träger (6) aufgebracht wird.

15. Verfahren nach einem der Ansprüche 1 bis 14, dadurch gekennzeichnet, daß die Erzeugung des Testbildes (20) und die Auswertung des Testbildes (20) räumlich getrennt voneinander erfolgen.

16. Vorrichtung zur Durchführung des Verfahrens nach Anspruch 1 mit
einem Laser (1) zum Erzeugen eines gerichteten Laserstrahles (2);
einer Steuerung (3, 4) zum Ablenken des Laserstrahls (2);
einem lichtempfindlichen Medium (5) zum Belichten mit dem Laserstrahl (2) zum Erzeugen eines Testbildes (20),
gekennzeichnet durch
eine positionierbare Bildaufnahmeeinrichtung (10) und einen Computer (11) zum
Erzeugen von digitalisierten Einzelbildern von Ausschnitten (21) des Testbildes (20),
Zusammensetzen der digitalisierten Einzelbilder zu einem Gesamtbild des Testbildes (20),
Vergleichen von Istpositionen des Laserstrahls (2) auf dem Gesamtbild mit den Positionskoordinaten und
Berechnen und Bereitstellen von Korrekturdaten für die Steuerung (4) zur Ablenkung des Laserstrahls (2) auf der Grundlage der Vergleichsergebnisse.

17. Vorrichtung nach Anspruch 16, dadurch gekennzeichnet, daß die Steuerung zum Ablenken des Laserstrahls (2) einen Galvanometerscanner (3) und eine Galvanometersteuerung (4) umfaßt.

18. Vorrichtung nach Anspruch 16 oder 17, gekennzeichnet durch einen Träger (6) zum Tragen des lichtempfindlichen Mediums (5).

19. Vorrichtung nach Anspruch 18, dadurch gekennzeichnet, daß der Träger (6) auf einem Objektträger (8, 9) einem Rapid-Prototyping-System anbringbar ist und relativ zu diesem in einer Richtung des Laserstrahles (2) höhenverstellbar ist.

20. Vorrichtung nach einem der Ansprüche 16 bis 19, dadurch gekennzeichnet, daß die Bildaufnahmeeinrichtung als Videokamera (10) ausgebildet ist.

21. Vorrichtung nach einem der Ansprüche 16 bis 19, dadurch gekennzeichnet, daß die Bildaufnahmeeinrichtung als Pixelscanner ausgebildet ist.

## Claims

1. Method for calibrating the controller for deflecting a laser beam for rapid prototyping systems, comprising the steps of:
a) Producing a test image (20) by irradiating a light-sensitive medium (5) by means of a laser beam (2) at prescribed desired positions as a function of position coordinates,
b) Producing digitized individual images of sections (21) of the test image (20),
c) Assembling the digitized individual images to form a total image of the test image (20),
d) Comparing actual positions of the laser beam (2) on the total image with the position coordinates,
e) Calculating and providing correction data for the controller (4) for deflecting the laser beam (2) on the basis of the comparison results.

2. Method according to Claim 1, characterized in that the digitized individual images are produced in each case by producing a section (21) of the test image (20) by means of an image-recording device (10), and subsequently digitizing the section (21) in a computer (11).

3. Method according to Claim 2, characterized in that a positionable video camera (10) is used as image-recording device, and the positioning of the video camera (10) is controlled by means of a computer (11) in order to produce the sections (21) of the test image (20).

4. Method according to Claim 2, characterized in that a positionable pixel scanner is used as image-recording device, and the positioning of the pixel scanner is controlled by means of a computer (11) in order to produce the sections (21) of the test image (20) .

5. Method according to Claim 2, characterized in that a pixel scanner is used as image-recording device.

6. Method according to one of Claims 1 to 5, characterized in that a film (5) sensitive to a wavelength of the laser beam (2) is used as light-sensitive medium.

7. Method according to one of Claims 1 to 6, characterized in that a test grid in the form of a coordinate grid is produced as test image (20).

8. Method according to one of Claims 1 to 7, characterized in that a centre point coding is produced on the test image (20).

9. Method according to Claim 4 or 5, characterized in that positional marks are produced on the test image (20) for the purpose of producing the digitized individual images by means of the pixel scanner.

10. Method according to one of Claims 2 to 9, characterized in that the digitized individual images are produced in the computer (11) on the basis of a grey value analysis of the sections (21), produced by means of the image-recording device, of the test image (20).

11. Method according to one of Claims 1 to 10, characterized in that coordinates of the test image (20) are digitized by means of a reference grid.

12. Method according to Claim 11, characterized in that a precision reference grid produced photomechanically is used as reference grid.

13. Method according to Claim 11 or 12, characterized in that the digitization comprises comparing image coordinates of the total image with coordinates of the reference grid and converting the image coordinates into real coordinates in order to obtain the actual positions of the laser beam in the total image in real coordinates on the basis of the comparison.

14. Method according to one of Claims 6 to 13, characterized in that the film (5) is applied to a substrate (6) which is mounted on an object holder (8, 9) of a rapid prototyping system and can be adjusted in height relative to the object holder.

15. Method according to one of Claims 1 to 14, characterized in that the production of the test image (20) and the evaluation of the test image (20) are performed in a fashion separated spatially from one another.

16. Device for carrying out the method according to Claim 1, comprising a laser (1) for generating a directional laser beam (2); a controller (3, 4) for deflecting the laser beam (2); a light-sensitive medium (5) to be exposed to the laser beam (2) in order to produce a test image (20), characterized by a positionable image-recording device (10) and a computer (11) for producing digitized individual images of sections (21) of the test image (20), assembling the digitized individual images to form a total image of the test image (20), comparing actual positions of the laser beam (2) on the total image with the position coordinates, and calculating and providing correction data for the controller (4) for deflecting the laser beam (2) on the basis of the comparison results.

17. Device according to Claim 16, characterized in that the controller for deflecting the laser beam (2) comprises a galvanometer scanner (3) and a galvanometer controller (4).

18. Device according to Claim 16 or 17, characterized by a substrate (6) for supporting the light-sensitive medium (5).

19. Device according to Claim 18, characterized in that the substrate (6) can be mounted on an object holder (8, 9) of a rapid prototyping system and can be adjusted in height relative to the latter in one direction of the laser beam (2).

20. Device according to one of Claims 16 to 19, characterized in that the image-recording device is constructed as a video camera (10).

21. Device according to one of Claims 16 to 19, characterized in that the image-recording device is constructed as a pixel scanner.

## Revendications

1. Procédé d'étalonnage du dispositif de commande destiné à dévier un faisceau laser, pour des systèmes de modelage accéléré (rapid-prototyping), comprenant les étapes suivantes :
a) création d'une mire électronique (20) par exposition d'un milieu photosensible (5) à la lumière d'un rayon laser (2) en des positions théoriques prescrites, en fonction des coordonnées de positionnement ;
b) création d'images numérisées élémentaires, constituant chacune une zone tronquée (21) de la mire électronique (20) ;
c) regroupement des images numérisées élémentaires pour former une image globale de la mire électronique (20) ;
d) comparaison entre les positions effectives du rayon laser (2) sur l'image globale et les coordonnées de positionnement ;
e) calcul et chargement des données de correction pour le dispositif de commande (4) destiné à dévier le rayon laser (2), basé sur les résultats de la comparaison.

2. Procédé selon la revendication 1, caractérisé en ce que chaque image numérisée élémentaire est obtenue par la création d'une zone tronquée (21) de la mire électronique (20) à l'aide d'un dispositif de prise de vues (10) et de la numérisation consécutive de la zone tronquée (21) dans un ordinateur (11).

3. Procédé selon la revendication 2, caractérisé en ce que le dispositif de prise de vues utilisé est une caméra vidéo ajustable (10), et en ce que le positionnement de la caméra vidéo (10), destinée à créer les zones tronquées (21) de la mire électronique (20), est commandé par un ordinateur (11).

4. Procédé selon la revendication 2, caractérisé en ce que le dispositif de prise de vues utilisé est un numériseur de pixels ajustable, et en ce que le positionnement du numériseur de pixels, destiné à créer les zones tronquées (21) de la mire électronique (20), est commandé par un ordinateur (11).

5. Procédé selon la revendication 2, caractérisé en ce que le dispositif de prise de vues utilisé est un numériseur de pixels.

6. Procédé selon l'une quelconque des revendications 1 à 5, caractérisé en ce que le milieu photosensible utilisé est un film (5) sensible à une longueur d'ondes du rayon laser (2).

7. Procédé selon l'une quelconque des revendications 1 à 6, caractérisé en ce que la mire électronique (20) créée est une grille témoin, constituée comme une trame de coordonnées.

8. Procédé selon l'une quelconque des revendications 1 à 7, caractérisé en ce qu'un codage des centres est réalisé sur la mire électronique (20).

9. Procédé selon la revendication 4 ou 5, caractérisé en ce que des repères de positionnement sont réalisés sur la mire électronique (20), afin de créer les images numérisées élémentaires à l'aide du numériseur de pixels.

10. Procédé selon l'une quelconque des revendications 2 à 9, caractérisé en ce que les images numérisées élémentaires sont créées dans un ordinateur (11) à partir d'une analyse des valeurs de gris des zones tronquées (21) de la mire électronique (20), créées à l'aide du dispositif de prise de vues.

11. Procédé selon l'une quelconque des revendications 1 à 10, caractérisé en ce que la numérisation des coordonnées de la mire électronique (20) est exécutée à l'appui d'une grille de référence.

12. Procédé selon la revendication 11, caractérisé en ce que la grille de référence utilisée est une grille de référence de précision réalisée par voie photomécanique.

13. Procédé selon la revendication 11 ou 12, caractérisé en ce que la numérisation englobe la comparaison des coordonnées de l'image globale avec les coordonnées de la grille de référence et la conversion des coordonnées de l'image en coordonnées réelles pour obtenir les positions effectives du rayon laser dans l'image globale en coordonnées réelles basées sur la comparaison.

14. Procédé selon l'une quelconque des revendications 6 à 13, caractérisé en ce que le film (5) est déposé sur un support (6), qui est posé sur un porte-objet (8, 9) d'un système de modelage accéléré, et il est possible de régler la hauteur dudit support par rapport au porte-objet.

15. Procédé selon l'une quelconque des revendications 1 à 14, caractérisé en ce que la création de la mire électronique (20) et l'évaluation de la mire électronique (20) sont deux procédures séparées physiquement l'une de l'autre.

16. Dispositif destiné à la mise en oeuvre du procédé selon la revendication 1, comprenant :
un laser (1) destiné à produire un rayon laser (2) dirigé ;
un dispositif de commande (3, 4) destiné à dévier le rayon laser (2) ;
un milieu photosensible (5) qui sera exposé à la lumière du rayon laser (2) pour créer une mire électronique (20),
caractérisé par
un dispositif de prise de vues (10) ajustable et un ordinateur (11), destinés à créer des images numérisées élémentaires constituant chacune une zone tronquée (21) de la mire électronique (20),
à regrouper les images numérisées élémentaires pour former une image globale de la mire électronique (20), à exécuter une comparaison entre les positions effectives du rayon laser (2) sur l'image globale et les coordonnées de positionnement et
à calculer et à charger les données de correction pour le dispositif de commande (4) destiné à dévier le rayon laser (2), en se basant sur les résultats de la comparaison.

17. Dispositif selon la revendication 16, caractérisé en ce que le dispositif de commande destiné à dévier le rayon laser (2) comprend un numériseur galvanométrique (3) et une commande galvanométrique (4).

18. Dispositif selon la revendication 16 ou 17, caractérisé par un support (6) sur lequel est déposé le milieu photosensible (5).

19. Dispositif selon la revendication 18, caractérisé en ce que le support (6) peut être posé sur un porte-objet (8, 9) d'un système de modelage accéléré, et en ce qu'il est possible de régler la hauteur dudit support par rapport au porte-objet, dans une direction du rayon laser (2).

20. Dispositif selon l'une quelconque des revendications 16 à 19, caractérisé en ce que le dispositif de prise de vues est conçu sous forme de caméra vidéo (10).

21. Dispositif selon l'une quelconque des revendications 16 à 19, caractérisé en ce que le dispositif de prise de vues est conçu sous forme de numériseur de pixels.
